# EUROPÄISCHE PATENTSCHRIFT

(11) **EP 0 422 419 B1**
(45) Veröffentlichungstag und Bekanntmachung des Hinweises auf die Patenterteilung: **15.02.1995**
(21) Anmeldenummer: 90118055.4
(22) Anmeldetag: 19.09.1990
(51) Int. Cl.: F16C 29/06, F16C 29/12

(54) **Wälzlager für Linearbewegungen Stichwort: Schienenführung mit Vorspannungseinstellung**
Rolling bearing for linear motions with a preload control on the guiding device
Palier à roulement pour mouvements linéaires avec réglage de la précontrainte dans le dispositif de guidage

(30) Priorität: 20.09.1989 DE 3931397
(43) Veröffentlichungstag der Anmeldung: 17.04.1991
(73) Patentinhaber: Deutsche Star GmbH, 97424 Schweinfurt (DE)
(72) Erfinder: Albert, Ernst, D-8729 Sand/Main (DE)
(74) Vertreter: Weickmann, Heinrich, Dipl.-Ing.

(56) Entgegenhaltungen:
- GB-A- 2 207 068
- US-A- 4 496 197
- PATENT ABSTRACTS OF JAPAN vol. 7, no. 291 (M-265)(1436) 27. Dezember 1983
- PATENT ABSTRACTS OF JAPAN vol. 7, no. 211 (M-243)(1356) 17. September 1983

## Beschreibung

Die Erfindung betrifft ein Wälzlager für Linearbewegungen, umfassend einen auf einer Schiene in deren Längsrichtung verschiebbar geführten Lagerkörper mit wenigstens einen Teil der Schiene zwischen sich aufnehmenden Schenkeln und einem diese Schenkel einstückig miteinander verbindenden Steg, wobei jedem der Schenkel mindestens ein Wälzkörperumlauf zugeordnet ist und jeder dieser Wälzkörperumläufe eine lastübertragende Wälzkörperreihe in Eingriff mit jeweils einer lastaufnehmenden Laufbahn des jeweiligen Schenkels und jeweils einer Laufbahn an einer diesem Schenkel benachbarten Seitenfläche der Schiene aufweist, wobei weiter die tragenden Wälzkörperreihen zwischen den jeweils zugehörigen Laufbahnen unter Vorspannung setzbar sind und diese Vorspannung durch Vorspannmittel, die mit einer Wirkungsrichtung im wesentlichen senkrecht zur Schienenlängsrichtung und im wesentlichen parallel zu einer Verbindungsebene von zwei beidseits der Schiene gelegenen, last übertragenden Wälzkörperreihen angeordnet sind, einstellbar ist.

Aus der DE-A-3 419 401 ist ein Wälzlager bekannt, bei dem die Vorspannung der tragenden Wälzkörperreihen durch Biegeverformung des Stegs um eine zur Schienenlängsrichtung parallele Biegeachse vermittels Bolzen erfolgt, die zwischen dem Steg und einem mit dem Steg verbundenen Anschlußteil zug- und druckwirksam sind. Die Vorspannungseinstellung kann dabei erst dann erfolgen, wenn das Wälzlager mit dem Anschlußteil verbunden ist. In dem Anschlußteil müssen besondere Bohrungen für die Bolzen vorgesehen werden. Die Zugänglichkeit dieser Bohrungen zur Einstellung der Vorspannung ist je nach Anwendungsfall unter Umständen schwierig.

Aus der DE-A-3 128 628 ist ein Linearwälzlager bekannt, bei dem der ebenfalls einstückige Lagerkörper in einem der die Wälzkörperumläufe aufnehmenden Schenkel mit einem parallel zur Längsrichtung der Schiene verlaufenden und neben den lastübertragenden Laufbahnen angeordneten Schlitz versehen ist, in den eine von der Außenseite des Lagerkörpers eingeschraubte Kopfschraube zum Einstellen der Vorspannung hineinragt. Durch Festziehen der Kopfschraube läßt sich dabei die Vorspannung der Wälzkörper einstellen. Nachteilig ist hierbei, daß der Herstellungsaufwand für den Lagerkörper hierdurch hoch ist und dieser im Einleitungsbereich der Lagerkräfte entweder geschwächt ist oder zur Vermeidung einer Schwächung verbreitert werden muß.

Aus der US-A-4 496 197 ist ein Wälzlager bekannt, welches in Schienenlängsrichtung zweigeteilt ist. Um die beiden Hälften miteinander zu verbinden und um eine Vorspannung des Lagers zu erreichen, werden die beiden Lagerkörperteile unter Verwendung von Zwischenstücken, die beispielsweise ein Rohrabschnitt sein können, mit Hilfe von Schrauben zusammengespannt. Bei diesem Linearwälzlager hat es sich als nachteilig erwiesen, daß für unterschiedliche Vorspannungswerte verschieden lange Zwischenstücke verwendet werden müssen. Dies hat zur Folge, daß für ein und denselben Lagertyp eine Anzahl von Zwischenstücken oder Zusatzscheiben bereitgehalten werden müssen. Darüberhinaus ist die Montage dieses Linearwälzlagers sehr aufwendig, da eine Vielzahl von Einzelteilen zusammengefügt werden müssen.

Schließlich ist aus der gattungsbildenden DE-A-3 527 307 ein ebenfalls zweigeteiltes Linearwälzlager bekannt. Bei diesem Wälzlager werden die beiden die Wälzkörperumläufe aufnehmenden Schenkel durch eine Oberplatte, die sich über die Schiene hinweg erstreckt, miteinander verbunden bzw. zusammengeschweißt. Die Einstellung der Vorspannung erfolgt durch Drücken mit Justiergewindebolzen auf eine zur Schienenmittelebene parallelen Seite des Lagers, so daß sich die Oberplatte elastisch verformt und somit eine Vorspannung erzeugt wird. Die Vorspannung kann auch hier erst nach Montage des Wälzlagers an dem Anschlußteil eingestellt werden. Darüberhinaus bedarf es bei diesem Wälzlager, ebenso wie bei dem aus der DE-PS 34 19 401 bekannten, einer besonderen Gestaltung des Anschlußteiles. Schließlich ist auch der Zusammenbau dieses Wälzlagers aufwendig, da es ebenfalls aus mehreren Teilen besteht.

Der Erfindung liegt die Aufgabe zugrunde, ein Wälzlager der eingangs genannten Art zu schaffen, welches bei einfachem und kraftflußgerechtem Aufbau eine exakte und leichte Einstellung der Vorspannung gegebenenfalls schon nach Zusammenbau von Lagerkörper und Schiene sowie vor Anbringung eines Anschlußteils erlaubt.

Die vorstehende Aufgabe wird dadurch gelöst, daß die Vorspannmittel im Bereich des Stegs angeordnet und zur Stauchung des Stegs in der Wirkungsrichtung der Vorspannmittel ausgebildet sind.

Die vorgeschlagene Lösung hat den Vorteil, daß bei einem einfach aufgebauten, kraftflußgerecht gestalteten Lager mit einem einstückigen Lagerkörper die Vorspannung bereits beim Zusammenbau dieses Lagers eingestellt werden kann. Darüberhinaus bedarf es für den gleichen Lagertyp keiner weiteren Teile, um unterschiedliche Vorspannungswerte zu erzielen. Schließlich bedarf es auch keiner besonderen Gestaltung des Anschlußteils.

Um einen möglichst großen Stauchweg bei geringer Stauchkraft zur Verfügung zu haben und damit die Vorspannung in weiten Grenzen variieren zu können, wird vorgeschlagen, daß die Vorspannmittel an dem Steg in Angriffsstellen angreifen, deren Abstand in Wirkungsrichtung vorzugsweise dem Abstand der lastübertragenden Wälzkörperreihen entspricht.

Zur Erzielung einer möglichst einfachen und kleinbauenden Form des Lagerkörpers wird weiterhin vorgeschlagen, daß die Vorspannmittel innerhalb des Steges untergebracht sind, wo sie auch stegversteifend wirken können.

Die Vorspannmittel können durch unterschiedliche Elemente gebildet sein. Beispielsweise können sie den Lagerkörper zangenförmig umgreifen. Vorzugsweise umfassen die Vorspannmittel mindestens einen Spannbolzen, welcher von einer Bohrung innerhalb des Steges aufgenommen ist. Dabei kann eine erste Angriffsstelle des Spannbolzens von einem gegen eine Schulter der Bohrung abgestützten Spannbolzenkopf und eine zweite Angriffsstelle von einer Verschraubung des Spannbolzens mit einem Gewindeabschnitt der Bohrung gebildet sein. Der Spannbolzen kann hierbei eine überall erhältliche Schraube sein.

Damit eine Vorspannung über die gesamte Länge der tragenden Wälzkörperreihen möglich ist, wird weiterhin vorgeschlagen, daß die Vorspannmittel über die Längserstreckung des Lagerkörpers in Längsrichtung der Schiene verteilt sind. Dabei können die Vorspannmittel zur Erteilung variierender Vorspannung innerhalb der Längserstreckung der lastübertragenden Wälzkörperreihen ausgebildet sein. Besonders vorteilhaft ist es, wenn im mittleren Bereich der lastübertragenden Wälzkörperreihen eine größere Vorspannung als in deren Endbereichen einstellbar ist. Hierdurch erfolgt der Einlauf der Wälzkörper in die lastübertragenden Wälzkörperreihen besonders leichtgängig.

Als Wälzkörper können sowohl Rollen als auch Kugeln verwendet werden. Besonders einfach wird die Fertigung, wenn die Wälzkörperumläufe von Kugeln gebildet sind. Dabei kann es von Vorteil sein, wenn die lastaufnehmenden Laufbahnen von Laufrillen gebildet sind, die eine bessere Schmiegung ergeben und damit die Aufnahme größerer Lasten ermöglichen.

Ein erfindungsgemäßes Linearwälzlager kann dadurch gebildet sein, daß jedem Schenkel mindestens und vorzugsweise zwei Wälzkörperumläufe mit einer entsprechenden Anzahl von lastübertragenden Wälzkörpern zugeordnet sind, wobei die Verbindungsebenen von jeweils zwei lastübertragenden Wälzkörperreihen beider Schenkel zueinander im wesentlichen parallel sind. Es besteht aber auch die Möglichkeit, daß mehr als zwei Wälzkörperumläufe vorgesehen werden. Da die Stauchung des Stegs eine ungefähr gleichmäßige Annäherung zusammengehöriger lastübertragender Wälzkörperreihen bewirkt, kann deren Vorspannung annäherend gleichmäßig variiert werden.

Um die Einstellung der Vorspannung mit geringen Stauchkräften zu erreichen, ist weiter vorgesehen, daß zumindest ein mittlerer Bereich des Steges durch Ausnehmungen elastisch stauchungsweich gestaltet ist. Es besteht zusätzlich oder auch alleine die Möglichkeit, daß der Lagerkörper aus elastisch stauchungsweichem Material, insbesondere Kunststoff oder Aluminium, besteht. Weiterhin besteht die Möglichkeit, daß der Lagerkörper aus Verbundmaterial besteht, wobei für seine die Wälzkörperumläufe aufnehmenden Schenkel ein härterer Werkstoff als für den Steg gewählt wird.

Insbesondere kann vorgesehen werden, daß die lastaufnehmenden Laufbahnen des Lagerkörpers an Laufplatten ausgebildet sind, welche aus einem gegenüber dem Material des Lagerkörpers härteren Werkstoff, insbesondere Stahl, bestehen und an dem jeweiligen Schenkel gegebenenfalls schaukelfähig gelagert sind. Durch die Schaukelfähigkeit der Laufplatten wird eine optimale Kraftübertragung erzielt.

Damit das vorgespannte erfindungsgemäße Wälzlager leicht an seinem Anschlußteil angebracht werden kann, wird weiterhin vorgeschlagen, daß auf der schenkelfernen Seite des Steges eine Befestigungsfläche zur Befestigung eines Anschlußteiles angebracht ist und daß zur Befestigung des Anschlußteiles an dieser Befestigungsfläche Befestigungsmittel vorgesehen sind, welche ein dem Bereich zu erwartender Stauchungsverformungen des Steges entsprechendes Befestigungsspiel erlauben.

Weitere vorteilhafte Ausgestaltungen der Erfindung sowie ein Ausführungsbeispiel werden anhand der Zeichnung nachstehend erläutert. Es zeigt:
- Fig. 1: eine perspektivische Darstellung einer Schiene und einem längs der Schiene verschiebbaren Lagerkörper eines erfindungsgemäßen Wälzlagers;
- Fig. 2: eine Stirnansicht im Halbschnitt auf das erfindungsgemäße Wälzlager gemäß Fig. 1;
- Fig. 3: eine Seitenansicht des Wälzlagers gemäß Fig. 1; und
- Fig. 4: eine Stirnansicht im Halbschnitt auf eine weitere Ausführungsform des erfindungsgemäßen Wälzlagers.

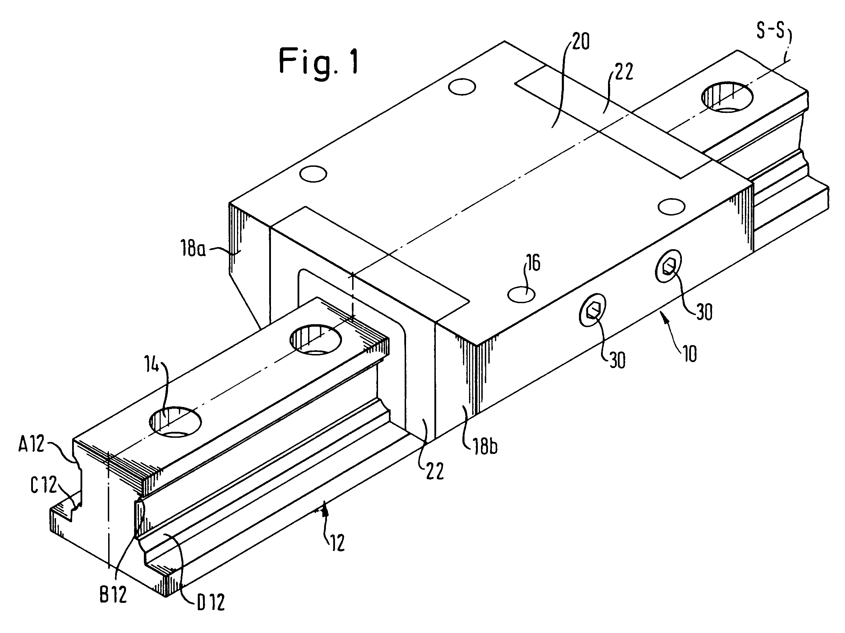

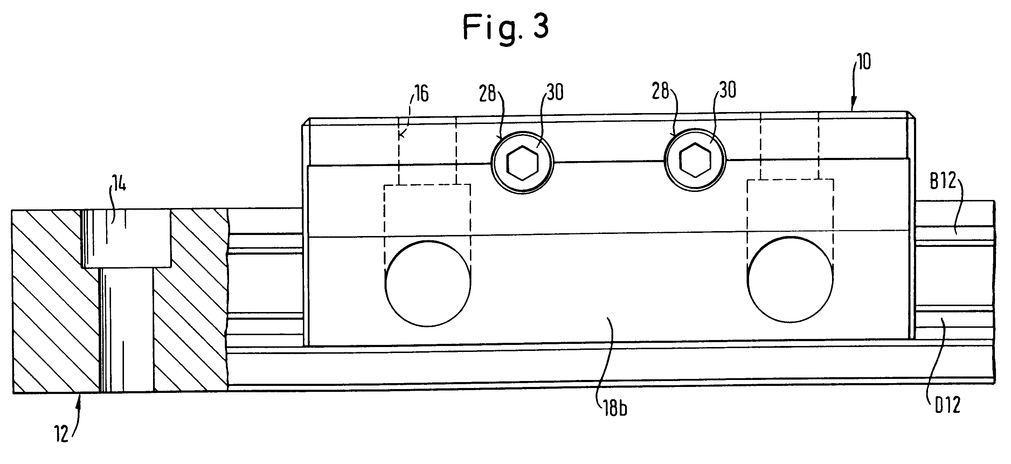

In Fig. 1 bis 3 ist ein Lagerkörper 10 gezeigt, der auf einer vorzugsweise aus Stahl hergestellten Schiene 12 in deren Längsrichtung verschiebbar geführt ist. Die Schiene 12 wird über mittige Bohrungen 14 mit dem Untergrund verschraubt. Die Befestigung des Lagerkörpers 10 an einem nicht gezeigten Anschlußteil, beispielsweise einem Werkzeugmaschinenschlitten, erfolgt durch Bolzenverbindungen mit Durchgangsbohrungen 16, die sich, bezogen auf die Symmetrieebene S-S, im äußeren Bereich des Lagerkörpers 10 befinden. Je nach Breite des Lagerkörpers 10 können derartige Bohrungen 16 auch in der Symmetrieebene S-S angeordnet sein. Damit nach erfolgter Vorspannung des Lagers ein Zusammenbau mit dem Anschlußteil möglich ist, ist der Durchmesser der Bohrungen 16 größer als der Durchmesser der zur Befestigung verwendeten Schrauben. Hierdurch können Fluchtungsfehler zwischen den Befestigungsbohrungen 16 des Lagerkörpers 10 und den entsprechenden Bohrungen des Anschlußteiles, die durch die Vorspannung entstehen, ausgeglichen werden.

Es besteht aber auch die Möglichkeit, daß anstelle der Durchgangsbohrungen 16 nicht weiter gezeigte Gewindebohrungen in dem Lagerkörper 10 vorgesehen sind. Dann muß aber in entsprechenden Bohrungen des Anschlußteiles ein Spiel vorgesehen werden, um diese Fluchtungsfehler beim Zusammenbau ausgleichen zu können.

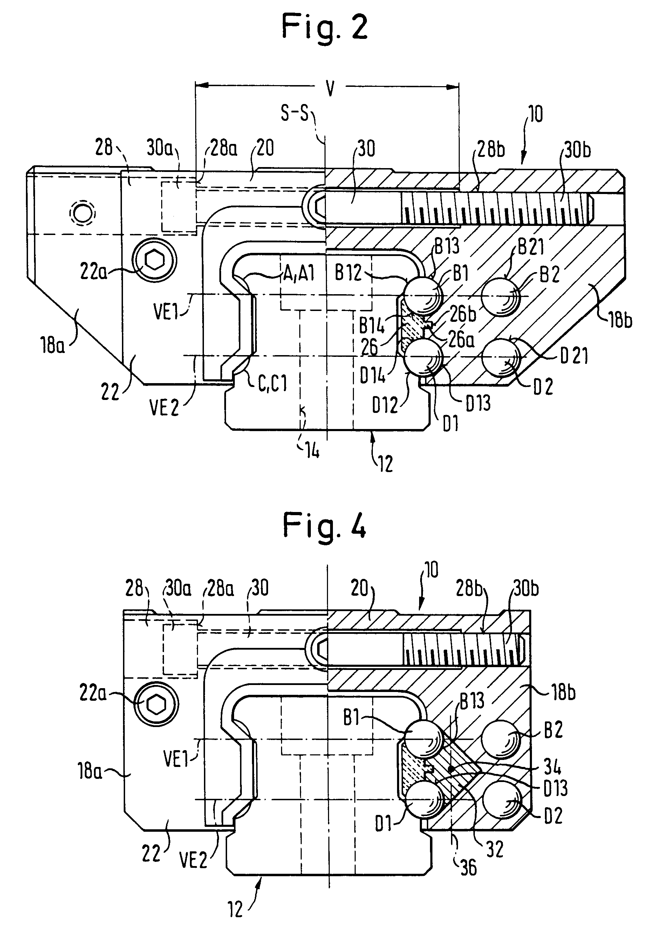

Wie aus den Fig. 2 und 4 hervorgeht, besitzt der Lagerkörper 10 zwei jeweils zwei Kugelumläufe A, B, C, D aufnehmende Schenkel 18a, b und einen diese Schenkel 18a, b verbindenden Steg 20 (vgl. auch Fig. 1). Die vier Kugelumläufe A-D aufnehmenden Schenkel 18a, b sind dabei so mit dem Steg 20 verbunden, daß der Lagerkörper 10 die Schiene 12 U-förmig umgreift. Die vier Kugelumläufe A-D bestehen aus jeweils einer in Schienenlängsrichtung verlaufenden, lastübertragenden Kugelreihe A1, B1, C1, D1, die in vier in der Schiene 12 eingearbeitete Laufrillen A12, B12, C12, D12 laufen, und aus jeweils einer rücklaufenden Kugelreihe B2, D2, die in Rücklaufkanälen B21, D21 innerhalb des Lagerkörpers 10 geführt sind, wobei die lastübertragenden Kugelreihen A1 und B1 sowie C1 und D1 jeweils in einer gemeinsamen Verbindungsebene VE1, VE2 liegen.

(In den Zeichnungsfiguren 2 und 4 sind jeweils nur die Kugelumläufe B und D mit den jeweiligen Kugelreihen B1, D1 bzw. B2, D2 dargestellt. Die Kugelumläufe A, C sowie deren lastübertragenden Kugelreihen A1, C1 sind nur mit den entsprechenden Bezugszeichen angedeutet.) Die lastübertragenden Kugelreihen A1-D1 und die rücklaufenden Kugelreihen B2, D2 sind durch nicht weiter dargestellte Bogenkugelreihen miteinander verbunden. Durch die hierdurch entstehenden Endloskugelumläufe A-D wird die Längsbewegung von gegeneinander verschiebbaren Teilen ermöglicht, wie beispielsweise einem Werkzeugmaschinenschlitten gegenüber seinem Werkzeugmaschinenbett. Die Bogenkugelreihen sind in Endplatten 22 angeordnet, die in Schienenlängsrichtung an dem jeweiligen stirnseitigen Ende des Lagerkörpers 10 über Schrauben 22a an diesem angebracht sind.

Die lasttragenden Kugelreihen A1-D1 sind zum einen durch in den Lagerkörper 10 eingearbeitete Laufrillen B13, D13 und zum anderen über ebenfalls Laufrillen B14, D14 aufweisende Haltestege 26 geführt. Jeder Haltesteg 26 wird über eine Feder 26a, die in eine entsprechende Nut 26b im Lagerkörper 10 eingreift, auf seiner ganzen Länge gesichert.

Wie aus den Fig. 2-4 hervorgeht, weist der Lagerkörper 10 zwei in dem Steg 20 quer zur Erstreckungsrichtung der Schiene 12 und parallel zu den Verbindungsebenen VE1,VE2 der Kugelumläufe A, B bzw. C, D verlaufende Durchgangsbohrungen 28 auf. Jede Durchgangsbohrung 28 weist auf der einen Seite von der Symmetrieebene S-S einen Stützabsatz 28a auf, wogegen sie auf der anderen Seite der Symmetrieebene S-S einen Gewindebereich 28b besitzt. Zwischen dem Stützabsatz 28a und dem Gewindebereich 28b erstreckt sich ein gewindeloser Abschnitt V, dessen Breite größer ist als die Breite der Schiene 12. Vorzugsweise entspricht die Breite des Abschnittes V dem Abstand der lastübertragenden Kugelreihen A1, C1 auf der einen Seite und B1, D1 auf der anderen Seite. In jede Durchgangsbohrung 28 ist eine als Vorspannmittel dienende Kopfschraube 30 eingedreht. Wird die Schraube 30 in der Bohrung 28 angezogen, so stützt sich die Schraube 30 mit ihrem Kopf 30a als erster Angriffsstelle an dem Stützabsatz 28a ab. Auf diese Weise wird der Abschnitt V elastisch gestaucht und die lastübertragenden Kugelreihen A1-D1 werden annähernd gleichmäßig unter Vorspannung zwischen den jeweils zugehörigen Laufrillen gesetzt.

In der Zeichnungsfigur 4 ist eine weitere Ausführungsform der Erfindung dargestellt. Sie unterscheidet sich von der Ausführungsform nach Fig. 1-3 dadurch, daß die Laufrillen B13, D13 des Lagerkörpers 10 durch Laufplatten 32 gebildet sind, die vorzugsweise aus Stahl bestehen. Hierdurch kann für den Lagerkörper 10 ein gegenüber Stahl weicherer und damit leichter stauchbarer Werkstoff verwendet werden. Die Laufplatten 32 können über, bezogen auf die Ausrichtung des Lagerkörpers 10, schematisch dargestellte Horizontal- (34) bzw. Vertikalachsen (36) schaukelfähig in dem Lagerkörper 10 angeordnet sein.

## Patentansprüche

1. Wälzlager für Linearbewegungen, umfassend einen auf einer Schiene (12) in deren Längsrichtung verschiebbar geführten Lagerkörper (10) mit wenigstens einen Teil der Schiene (12) zwischen sich aufnehmenden Schenkeln (18a, b) und einem diese Schenkel einstückig miteinander verbindenden Steg (20), wobei jedem der Schenkel (18a, b) mindestens ein Wälzkörperumlauf (A, B, C, D) zugeordnet ist und jeder dieser Wälzkörperumläufe (A-D) eine lastübertragende Wälzkörperreihe (A1, B1, C1, D1) in Eingriff mit jeweils einer lastaufnehmenden Laufbahn (B13, D13) des jeweiligen Schenkels (18a, b) und jeweils einer Laufbahn (A12, B12, C12, D12) an einer diesem Schenkel (18a, b) benachbarten Seitenfläche der Schiene (12) aufweist, wobei weiter die tragenden Wälzkörperreihen (A1-D1) zwischen den jeweils zugehörigen Laufbahnen (B13, D13; A12-D12) unter Vorspannung setzbar sind und diese Vorspannung durch Vorspannmittel (30), die mit einer Wirkungsrichtung im wesentlichen senkrecht zur Schienenlängsrichtung und im wesentlichen parallel zu einer Verbindungsebene (VE1, VE2) von zwei beidseits der Schiene (12) gelegenen, lastübertragenden Wälzkörperreihen (A1 - D1) angeordnet sind, einstellbar ist,
**dadurch gekennzeichnet**, daß die Vorspannmittel (30) im Bereich des Steges (20) angeordnet und zur Stauchung des Stegs (20) in der Wirkungsrichtung der Vorspannmittel ausgebildet sind.

2. Wälzlager nach Anspruch 1, dadurch gekennzeichnet, daß die Vorspannmittel (30) an dem Steg (20) in Angriffsstellen angreifen, deren Abstand (V) in Wirkungsrichtung vorzugsweise dem Abstand der lastübertragenden Wälzkörperreihen (A1-D1) entspricht.

3. Wälzlager nach Anspruch 1 oder 2, dadurch gekennzeichnet, daß die Vorspannmittel (30) innerhalb des Steges (20) untergebracht sind.

4. Wälzlager nach Anspruch 3, dadurch gekennzeichnet, daß die Vorspannmittel (30) mindestens einen Spannbolzen (30) umfassen, welcher von einer Bohrung (28) innerhalb des Steges (20) aufgenommen ist.

5. Wälzlager nach Anspruch 4, dadurch gekennzeichnet, daß eine erste Angriffsstelle des Spannbolzens (30) von einem gegen eine Schulter (28a) der Bohrung (28) abgestützten Spannbolzenkopf (30a) und eine zweite Angriffsstelle von einer Verschraubung (30b) des Spannbolzens (30) mit einem Gewindeabschnitt (28b) der Bohrung (28) gebildet ist.

6. Wälzlager nach einem der Ansprüche 1 - 5, dadurch gekennzeichnet, daß die Vorspannmittel (30) über die Längserstreckung des Lagerkörpers (10) in Längsrichtung der Schiene (12) verteilt sind.

7. Wälzlager nach Anspruch 6, dadurch gekennzeichnet, daß die Vorspannmittel (30) zur Erteilung variierender Vorspannung innerhalb der Längserstreckung der lastübertragenden Wälzkörperreihen (A1-D1) ausgebildet sind.

8. Wälzlager nach Anspruch 7, dadurch gekennzeichnet, daß im mittleren Bereich der lastübertragenden Wälzkörperreihen (A1-D1) eine größere Vorspannung als in deren Endbereichen einstellbar ist.

9. Wälzlager nach einem der Ansprüche 1 - 8, dadurch gekennzeichnet, daß die Wälzkörperumläufe (A-D) von Kugeln gebildet sind.

10. Wälzlager nach Anspruch 9, dadurch gekennzeichnet, daß die lastaufnehmenden Laufbahnen (B13,D13;A12-D12) des Lagerkörpers (10) und/oder der Schiene (12) von Laufrillen gebildet sind.

11. Wälzlager nach einem der Ansprüche 1 - 10, dadurch gekennzeichnet, daß jedem Schenkel (18a, b) mindestens und vorzugsweise zwei Wälzkörperumläufe (A-D) mit einer entsprechenden Anzahl von lastübertragenden Wälzkörperreihen (A1-D1) zugeordnet sind, wobei die Verbindungsebenen (VE1,VE2) von jeweils zwei lastübertragenden Wälzkörperreihen (A1, B1; C1, D1) beider Schenkel (18a, b) zueinander im wesentlichen parallel sind.

12. Wälzlager nach einem der Ansprüche 1 - 11, dadurch gekennzeichnet, daß zumindest ein mittlerer Bereich (V) des Stegs (20) durch Ausnehmungen elastisch stauchungsweich gestaltet ist.

13. Wälzlager nach einem der Ansprüche 1 - 12, dadurch gekennzeichnet, daß der Lagerkörper (10) aus elastisch stauchungsweichem Material, insbesondere Kunststoff oder Aluminium, besteht.

14. Wälzlager nach einem der Ansprüche 1 - 13, dadurch gekennzeichnet, daß die lastaufnehmenden Laufbahnen (B13,D13) des Lagerkörpers (10) an Laufplatten (32) ausgebildet sind, welche aus einem gegenüber dem Material des Lagerkörpers (10) härteren Werkstoff, insbesondere Stahl, bestehen und an dem jeweiligen Schenkel (18a, b) gegebenenfalls schaukelfähig gelagert sind.

15. Wälzlager nach einem der Ansprüche 1 - 14, dadurch gekennzeichnet, daß auf der schenkelfernen Seite des Stegs (20) eine Befestigungsfläche zur Befestigung eines Anschlußteils angebracht ist und daß zur Befestigung des Anschlußteils an dieser Befestigungsfläche Befestigungsmittel vorgesehen sind, welche ein dem Bereich zu erwartender Stauchungsverformungen des Stegs (20) entsprechendes Befestigungsspiel erlauben.

## Claims

1. An anti-friction bearing for linear movements comprising a bearing body (10) which is guided for longitudinal movement on a rail (12) the body having legs (18a, b) accommodating at least one part of the rail (12) between them and a web (20) connecting these legs (18a, b) to one another, at least one rolling body guide (A, B, C, D) being allocated to each of the legs (18a, b) and each of the rolling body guides (A - D) having one load-transmitting rolling body path (A1,B1,C1,D1) in engagement with one load-receiving path (B13, D13) of the respective leg (18a, b) and one path (A12, B12, C12, D12) at one side face of the rail (12) which is adjacent to this leg (18a, b), the load-bearing rolling body paths (A1-D1) being preloadable between the respective allocated paths (B13, D13; A12 - D12) and this preload being adjustable through biassing means (30) which are disposed with a direction of effect substantially normal to the longitudinal direction of the rail and substantially parallel to a connecting plane (VE1, VE2) of two load-transmitting rolling body paths (A1 - D1) lying at both of the rail sides (12), characterised in that the biassing means (30) are disposed in the region of the web (20) and are designed to upset the web (20) in the direction of effect of the biassing means.

2. An anti-friction bearing according to claim 1 characterised in that the biassing means (30) at the web (20) act on points of application, whose distance (V) in the direction of effect preferably corresponds to the distance between the load-transmitting rolling body paths (A1 - D1).

3. An anti-friction bearing according to claim 1 or 2 characterised in that the biassing means (30) are accommodated within the web (20).

4. An anti-friction bearing according to claim 3 characterised in that the biassing means (30) comprises at least one tension bolt (30) which is accommodated in a borehole (28) within the web (20).

5. An anti-friction bearing according to claim 4 characterised in that a first application point of the tension bolt (30) is formed by a tension bolt head (30a) supported by a shoulder (28a) of the borehole (28) and a second application point by a screw-joint (30b) of the tension bolt (30) with a threaded section (28b) of the borehole (28).

6. An anti-friction bearing according to one of claims 1 to 5 characterised in that the biassing means (30) are spread along the longitudinal extension of the bearing body (10) in the longitudinal direction of the rail (12).

7. An anti-friction bearing according to claim 6 characterised in that the biassing means (30) are developed within the longitudinal extension of the load-transmitting rolling body paths (A1 - D1) for the imparting of varying preload.

8. An anti-friction bearing according to claim 7 characterised in that in the mid-range of the load-transmitting rolling body paths (A1 - D1) a higher preload can be produced than in the end ranges.

9. An anti-friction bearing according to one of claims 1 to 8 characterised in that the rolling body guides (A - D) are formed by balls.

10. An anti-friction bearing according to claim 9 characterised in that the load-receiving paths (B13, D13; A12 - D12) of the bearing body (10) and/or of the rail (12) are formed by tracks.

11. An anti-friction bearing according to one of claims 1 to 10 characterised in that each leg (18a, b) is allocated to at least and preferably to two, rolling body guides (A - D) with a corresponding number of load-transmitting rolling body paths (A1 - D1), the connecting planes (VE1, VE2) of each of the two load-transmitting rolling body paths (A1, B1; C1, D1) of both legs (18a, b) being substantially parallel to one another.

12. An anti-friction bearing according to one of claims 1 to 11 characterised in that at least one mid-range (V) of the web (20) is made elastically-upsetably-soft by the provision of recesses.

13. An anti-friction bearing according to one of claims 1 to 12 characterised in that the bearing body (10) consists of elastically upsetably-soft material, in particular of plastics or aluminium.

14. An anti-friction bearing according to one of claims 1 to 13 characterised in that the load-receiving paths (B13, D13) of the bearing body (10) are formed on rotary discs (32) which consist of a harder material in comparison to the material of the bearing body (10), especially of steel, and which are possibly attached for movement in relation to the respective leg (18a, b).

15. An anti-friction bearing according to one of claims 1 to 14 characterised in that on the side of the web (20) which is remote from the leg a fixing surface is provided for the fixing of a connecting part and that for the fixing of the connecting part on the fixing surface fixing means are provided which allow a play of the fixing which corresponds to the region of upset deformations to be expected of the web (20).

## Revendications

1. Palier à roulement pour déplacements linéaires, comprenant un corps formant palier guidé sur un rail (12) et pouvant être déplacé en translation longitudinale sur celui-ci, ledit corps formant palier comportant des ailes (18a, b) entre lesquelles est logée au moins une partie du rail (12) et une traverse (20) reliant ces ailes d'un seul tenant l'une à l'autre, au moins un anneau (A, B, C, D) d'organes de roulement correspondant à chacune des ailes (18a, b) et chacun de ces anneaux (A à D) d'organes de roulement présentant une série (A1, B1, C1, D1) d'organes de roulement transmettant des charges, en prise avec chaque fois une voie (B13, D13) de roulement recevant des charges de l'aile (18a, b) considérée et avec chaque fois une voie ((A12, B12, C12, D12) de roulement sur une face latérale du rail (12) adjacente à cette aile (18a, b), les séries (A1 à D1) d'organes de roulement portants situées entre les voies (B13, D13 ; A12 à D12) de roulement correspondantes pouvant par ailleurs être placées sous précontrainte, et cette précontrainte pouvant être réglée grâce à des moyens (30) de précontrainte, qui sont montés, avec une direction d'action sensiblement perpendiculaire au sens longitudinal du rail et sensiblement parallèle à un plan de liaison (VE1, VE2) de deux séries (A1 à D1) d'organes de roulement transmettant des charges situées de part et d'autre du rail (12),
caractérisé en ce que les moyens de précontrainte (30) sont disposés dans le secteur de la traverse (20) et sont conformés pour refouler la traverse (20) dans la direction d'action des moyens de précontrainte.

2. Palier à roulement selon la revendication 1, caractérisé en ce que les moyens de précontrainte (30) viennent en prise sur la traverse (20) dans des points de prise, dont l'écartement (V) dans le sens d'action correspond de préférence à l'écartement des séries (A1 à D1) d'organes de roulement transmettant des charges.

3. Palier à roulement selon l'une quelconque des revendications 1 ou 2, caractérisé en ce que les moyens (30) de précontrainte sont montés à l'intérieur de la traverse (20).

4. Palier à roulement selon la revendication 3, caractérisé en ce que les moyens (30) de précontrainte, comprennent au moins un boulon de serrage (30), qui est logé dans un alésage (28) à l'intérieur de la traverse (20).

5. Palier à roulement selon la revendication 4, caractérisé en ce qu'un premier point de prise du boulon de serrage (30) est constitué par une tête (30a) de boulon de serrage prenant appui contre un épaulement (28a) de l'alésage (28) et un deuxième point de prise est formé par un assemblage vissé (30b) du boulon de serrage (30) avec une section taraudée (28b) de l'alésage (28).

6. Palier à roulement selon l'une quelconque des revendications 1 à 5, caractérisé en ce que les moyens (30) de précontrainte sont répartis sur l'étendue en longueur du corps formant palier (10) dans le sens longitudinal du rail (12).

7. Palier à roulement selon la revendication 6, caractérisé en ce que les moyens (30) de précontrainte sont conformés pour assurer une précontrainte variable sur l'étendue longitudinale des séries (A1 à D1) d'organes de roulement transmettant les charges.

8. Palier à roulement selon la revendication 7, caractérisé en ce qu'il est possible de régler dans le secteur médian des séries (A1 à D1) d'organes de roulement transmettant les charges, une précontrainte plus importante que dans leurs secteurs d'extrémité.

9. Palier à roulement selon l'une quelconque des revendications 1 à 8, caractérisé en ce que les anneaux (A à D) d'organes de roulement sont constitués de billes.

10. Palier à roulement selon la revendication 9, caractérisé en ce que les voies (B13, D13 ; A12 à D12) recevant les charges, du corps formant palier (10) et/ou du rail (12) sont constituées de gorges de roulement.

11. Palier à roulement selon l'une quelconque des revendications 1 à 10, caractérisé en ce qu'à chaque aile (18a, b) correspondent au moins un et de préférence deux anneaux (A à D) d'organes de roulement, comportant un nombre correspondant de séries (A1 à D1) d'organes de roulement, les plans de liaison (VE1, VE2) de respectivement deux séries d'organes (A1, B1 ; C1, D1) de roulement des deux ailes (18a, b) étant sensiblement parallèles l'un à l'autre.

12. Palier à roulement selon l'une quelconque des revendications 1 à 11, caractérisé en ce qu'au moins un secteur médian (V) de la traverse (20) est formé de manière à être élastique et souple en vue du refoulage, grâce à des évidements.

13. Palier à roulement selon l'une quelconque des revendications 1 à 12, caractérisé en ce que le corps formant palier (10) est constituée de matériau élastique et souple en vue de refoulage, en particulier en matériau synthétique ou en aluminium.

14. Palier à roulement selon l'une quelconque des revendications 1 à 13, caractérisé en ce que les voies (B13, D13) de roulement du corps formant palier (10) recevant les charges sont formées sur des plaques de roulement, qui sont constituées d'un matériau plus dur que celui du corps formant palier (10), en particulier en acier, et sont supportées sur l'aile (18a, b) considérée, le cas échéant en étant capable de basculer.

15. Palier à roulement selon l'une quelconque des revendications 1 à 14, caractérisé en ce qu'une surface de fixation destinée à la fixation d'une pièce d'assemblage est montée sur le côté de la traverse (20) éloigné des ailes, et en ce que, pour fixer la pièce d'assemblage sur cette surface de fixation, des moyens de fixation qui permettent un jeu de fixation correspondant, dans le secteur des déformations par refoulage de la traverse (20) à prévoir.
